(19) Europäisches Patentamt
European Patent Office
Office européen des brevets

(11) EP 2 085 791 A1

(12) **EUROPEAN PATENT APPLICATION**

(43) Date of publication:
05.08.2009 Bulletin 2009/32

(51) Int Cl.:
*G01S 11/12* (2006.01)      *G06T 7/00* (2006.01)
*G06T 7/20* (2006.01)

(21) Application number: 09151485.1

(22) Date of filing: 28.01.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 29.01.2008 JP 2008017662

(71) Applicant: Omron Corporation
Kyoto-shi, Kyoto 600-8530 (JP)

(72) Inventor: Koitabashi, Hiroyoshi
c/o OMRON Corporation
Shimogyo-ku, Kyoto-shi
Kyoto Kyoto 600-8530 (JP)

(74) Representative: Giovannini, Francesca et al
Osha Liang
32, avenue de l'Opéra
75002 Paris (FR)

(54) **Image processing device, image processing method, and program**

(57)    An image processing device for performing a process of measuring a distance to a predetermined object using an image imaged by an imaging device attached to a vehicle which moves has a movement detection unit for detecting that the vehicle moved a constant amount from a position where the imaging device imaged a first image, an image acquiring unit for acquiring the first image, and a second image serving as an image at the time of being detected that the vehicle moved a constant amount by the movement detection unit, and a measurement unit for measuring the distance to the object by a movement stereo method using the first image and second image acquired by the image acquiring unit.

Fig. 3

**Description**

BACKGROUND OF THE INVENTION

1. TECHNICAL FIELD

The present invention relates to image processing devices, image processing methods, and programs, in particular, to an image processing device, an image processing method, and a program enabling a measurement error to be constant when measuring a distance to an object through a movement stereo method.

2. RELATED ART

A system of detecting an obstacle in front or in back of an automobile using an image imaged with a camera attached at a front or a back of a vehicle such as an automobile, and issuing a warning is developed.

Such system includes a stereo camera method (refer to, for example, Japanese Patent Application Laid-Open No. 2006-53754) in which two cameras are installed at distant positions of the vehicle, and a three-dimensional position of an object in the image is detected through the principle of triangulation using two images imaged by the two cameras to detect whether it is an obstacle; and a movement stereo type in which only one camera is installed at the vehicle, and a three-dimensional position of an object in the image is detected through the principle of triangulation using two images imaged at different positions at different times to detect whether it is an obstacle (refer to, for example, Japanese Patent Application Laid-Open No. 2000-74645).

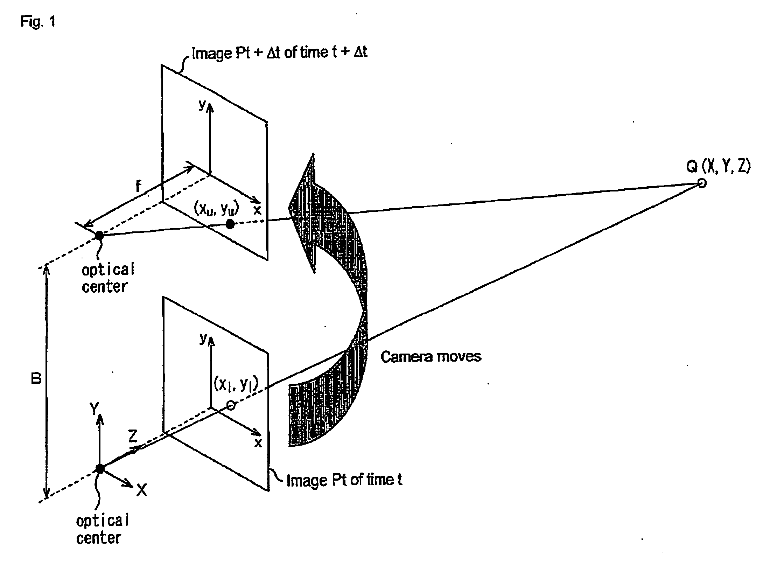

FIG. 1 shows a view showing the concept of three-dimensional measurement by the movement stereo method.

In the three-dimensional measurement using the movement stereo method, two images of an image Pt imaged at a predetermined time t, and an image Pt+$\Delta$t imaged with the same camera at time t+$\Delta$t elapsed a predetermined time interval $\Delta$t from time t are used.

The vehicle installed with the camera moves with elapse of the time interval $\Delta$t. Thus, in the image Pt before the movement and the image Pt+$\Delta$t after the movement, a distance between the optical centers is spaced apart by B (hereinafter also referred to as base length B), and a three-dimensional position (X, Y, Z) of an object Q can be detected through the principle of triangulation similar to the stereo camera method from a position $(x_1, y_1)$ of the object Q on the image Pt and a position $(x_u, y_u)$ of the object Q on the image Pt+$\Delta$t, where a Z coordinate value obtained here becomes a distance to the object Q.

Conventionally, when measuring a distance to the object in the image through the movement stereo method as described above, the time interval $\Delta$t is constant, and the three-dimensional position of the object in the image is detected using the image acquired for every constant time interval $\Delta$t.

SUMMARY

A distance error (measurement error in the distance to the object) $\Delta$Z in a case where a distance to the object is measured by the movement stereo method is expressed as equation (1).

$$\Delta Z = -\frac{Z^2}{Bf}\Delta d \qquad \cdots (1)$$

In equation (1), B is a base length, $\Delta$d is a parallax error, Z is a distance to be obtained, and f is a focal length.

In other words, according to equation (1), the distance error $\Delta$Z changes by a base length B, where the distance error $\Delta$Z becomes smaller the larger the base length B, and the distance error $\Delta$Z becomes larger the smaller the base length B.

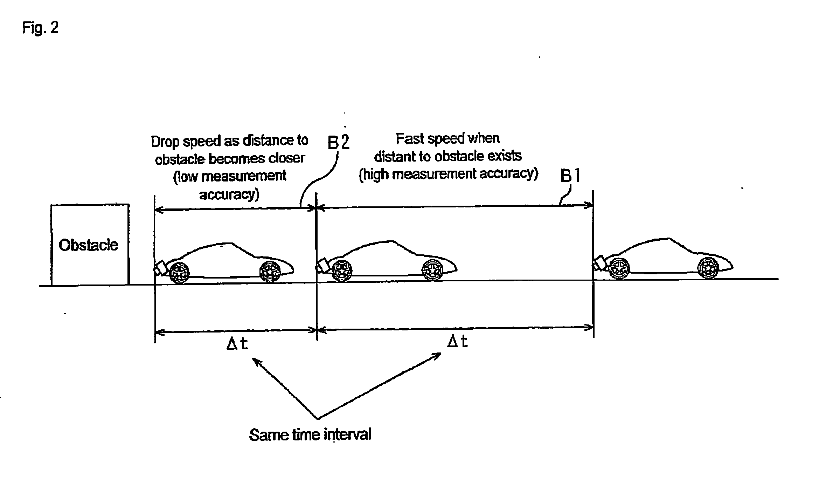

Here, as an example, a situation where a camera is installed at a rear side of the vehicle (passenger car), and the vehicle moves backward and stops in front of an obstacle is considered, as shown in FIG. 2. This situation occurs when parking in a garage or at a predetermined position in a parking lot, and the like.

As shown in FIG. 2, when moving backward and stopping in front of the obstacle, a user or a driver approaches the obstacle as the user moves closer to a stop target position, and thus the speed of the vehicle is usually dropped (slowed down).

Therefore, comparing the base length B1 between the two images imaged with time interval $\Delta$t when the speed

is fast before dropping the speed, and the base length B2 between the two images imaged with the time interval Δt when the speed is slow after dropping the speed, the base length B2 is shorter than the base length B1, and thus the measurement error in the distance to the object measured with the two images of the base length B2 becomes greater than the measurement error in the distance to the object measured with the two images of the base length B1.

That is, higher accuracy is desired in the measurement of the distance to the object the closer the vehicle is to the obstacle, whereas when the distance to the object is measured using the image acquired for every constant time interval Δt, measurement accuracy varies according to the movement distance by elapse of the time interval Δt, and the measurement accuracy generally changes to the worst side.

One or more embodiments of the present invention enables the measurement error to be constant when measuring the distance to the object through the movement stereo method.

In accordance with one aspect of the present invention, an image processing device relates to an image processing device for performing a process of measuring a distance to a predetermined object using an image imaged by an imaging device attached to a vehicle which moves; the image processing device including a movement detection means for detecting that the vehicle moved a constant amount from a position where the imaging device imaged a first image; an image acquiring means for acquiring the first image and a second image serving as an image at the time when the movement detection means detects that the vehicle moved a constant amount; and a measurement means for measuring the distance to the object by a movement stereo method using the first image and the second image acquired by the image acquiring means.

In the image processing device according to one aspect of the present invention, the movement of a constant amount by the vehicle from the position where the imaging device, which is attached to the vehicle that moves, imaged the first image is detected, the first image and the second image serving as the image at the time when the movement detection means detects that the vehicle moved a constant amount are acquired, and the distance to the object is measured by a movement stereo method using the acquired first image and second image.

Therefore, a distance between the imaging positions of the first image and the second image becomes constant, whereby the measurement accuracy in the obstacle measurement becomes constant without being influenced by change in speed.

The movement detection means, the image acquiring means, and the measurement means are configured by CPU and the like.

The movement detection means can detect that the vehicle moved a constant amount based on a signal from a sensor attached to the vehicle, where signal of a vehicle speed pulse, signal representing vehicle speed, as well as, signal representing an engine rotation number of the vehicle and a gear selection signal representing a selected gear can be used for the signal from the sensor attached to the vehicle. The distance to the object then can be measured using the first image and the second image in which the distance between imaging positions is constant, whereby the measurement accuracy in the obstacle measurement becomes constant.

The movement detection means can detect that the vehicle moved a constant amount by processing an image imaged by the imaging device. The movement detection means can detect that the vehicle moved a constant amount based on a relationship between an image interval of the image imaged previously and a movement amount. Furthermore, the movement detection means can detect that the vehicle moved a constant amount by integrating a movement amount sequentially calculated from the imaged image.

Therefore, the distance to the object can be measured using the first image and the second image in which the distance between imaging positions is constant, whereby the measurement accuracy in the obstacle measurement becomes constant. The signal from the sensor attached to the vehicle is not necessary, and thus movement of a constant amount can be detected even if an external signal is not provided.

The image acquiring means can acquire the second image imaged when detected by the movement detection means that the vehicle moved a constant amount from the position where the first image is imaged. Thus, the first image and the second image in which the distance between the imaging positions is constant can be acquired, whereby the measurement accuracy in the obstacle measurement becomes constant.

An image storage means for storing images imaged by the imaging device is further arranged; wherein the image acquiring means can acquire, as the second image, a most recent image of the images stored in the image storage means when detected by the movement detection means that the vehicle moved a constant amount from the position where the first image is imaged. Thus, the first image and the second image in which the distance between the imaging positions is constant can be acquired, whereby the measurement accuracy in the obstacle measurement becomes constant. The image storage means is configured by RAM (Random Access Memory) and the like.

The image acquiring means can acquire, as the second image, an image imaged immediately after detected by the movement detection means that the vehicle moved a constant amount from the position where the first image is imaged. Thus, the first image and the second image in which the distance between the imaging positions is constant can be acquired, whereby the measurement accuracy in the obstacle measurement becomes constant.

An image storage means for storing images imaged by the imaging device is further arranged; wherein the image acquiring means may acquire, as the second image, a most recent image of the images stored in the image storage means at a time when the movement detection means detects that the vehicle moved a constant amount from the position where the first image is imaged, or an image imaged at a time close to the detection time of the images imaged immediately after the detection time. Thus, the first image and the second image in which the distance between the imaging positions is constant can be acquired, whereby the measurement accuracy in the obstacle measurement becomes constant. The image storage means is configured by RAM (Random Access Memory) and the like.

An image processing method according to one aspect of the present invention relates to an image processing method for performing a process of measuring a distance to a predetermined object using an image imaged by an imaging device attached to a vehicle which moves; the image processing method including the steps of detecting that the vehicle moved a constant amount from a position where the imaging device imaged a first image; acquiring the first image and a second image serving as an image at the time when it is detected that the vehicle moved a constant amount; and measuring the distance to the object by a movement stereo method using the acquired first image and second image.

In the image processing method according to one aspect of the present invention, the movement of a constant amount by the vehicle from the position where the imaging device imaged the first image is detected, the first image and the second image serving as the image at the time when it is detected that the vehicle moved a constant amount are acquired, and the distance to the object is measured by a movement stereo method using the first image and the second image.

Therefore, the distance between the imaging positions of the first image and the second image becomes constant, whereby the measurement accuracy in the obstacle measurement becomes constant without being influenced by change in speed.

This step includes the steps of detecting that the vehicle moved a constant amount from a position where the imaging device imaged a first image; acquiring the first image and a second image serving as an image at the time when it is detected that the vehicle moved a constant amount; and measuring the distance to the object by a movement stereo method using the acquired first image and second image executed by the CPU, or the like.

A computer readable medium storing a program according to one aspect of the present invention relates to a program comprising functionality for causing a computer to perform a process of measuring a distance to a predetermined object using an image imaged by an imaging device attached to a vehicle which moves; wherein the process comprises detecting that the vehicle moved a constant amount from a position where the imaging device imaged a first image; acquiring the first image and a second image serving as an image at the time when it is detected that the vehicle moved a constant amount; and measuring the distance to the object by a movement stereo method using the acquired first image and second image.

In the program according to one aspect of the present invention, the movement of a constant amount by the vehicle from the position where the imaging device imaged the first image is detected, the first image and the second image serving as the image at the time when it is detected that the vehicle moved a constant amount are acquired, and the distance to the object is measured by a movement stereo method using the first image and second image.

Therefore, the distance between the imaging positions of the first image and the second image becomes constant, whereby the measurement accuracy in the obstacle measurement becomes constant without being influenced by change in speed.

This step includes the steps of detecting that the vehicle moved a constant amount from a position where the imaging device imaged a first image; acquiring the first image and a second image serving as an image at the time when it is detected that the vehicle moved a constant amount; and measuring the distance to the object by a movement stereo method using the acquired first image and second image executed by the CPU, or the like.

According to one aspect of the present invention, the measurement error becomes constant when measuring the distance to the object by the measurement stereo method.

BRIEF DESCRIPTION OF THE DRAWINGS

FIG. 1 shows a view explaining a movement stereo method;
FIG. 2 shows a view explaining an example of the related art;
FIG. 3 shows a block diagram showing a configuration example of an obstacle detection system according to a first embodiment the present invention;
FIG. 4 shows a view explaining a camera coordinate system and a road surface coordinate system;
FIGS. 5A and 5B show views explaining a process of a movement detection unit;
FIG. 6 shows a flowchart describing an obstacle detection process;
FIG. 7 shows a view describing detection of an obstacle;
FIG. 8 shows a view describing effects of the obstacle detection system according to an embodiment of the present invention;
FIG. 9 shows a block diagram showing a configuration example of an obstacle detection system according to a second embodiment of the present invention;

FIG. 10 shows a block diagram showing a configuration example of an obstacle detection system according to a third embodiment of the present invention;

FIG. 11 shows a block diagram showing a configuration example of an obstacle detection system according to a fourth embodiment of the present invention;

FIGS. 12A to 12C show views describing the selection of the first image and the second image in the obstacle detection system according to one or more embodiments of the present invention;

FIG. 13 shows a block diagram showing a configuration example of an obstacle detection system according to a fifth embodiment of the present invention; and

FIG. 14 shows a block diagram showing a configuration example of a computer according to an embodiment of the present invention.

## DETAILED DESCRIPTION

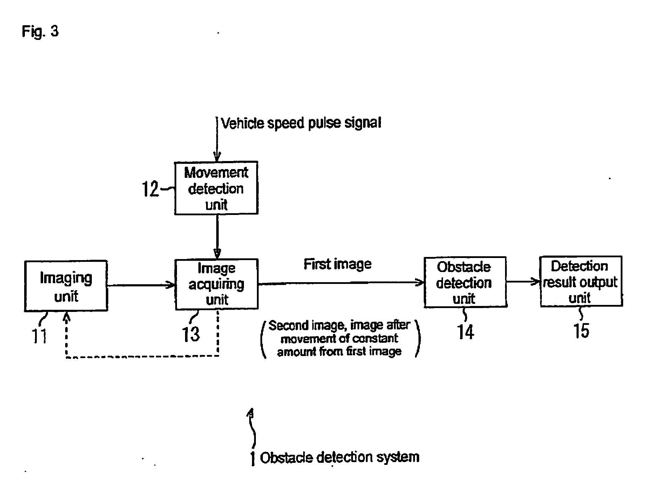

FIG. 3 shows a configuration example of an obstacle detection system according to one embodiment of the present invention.

An obstacle detection system 1 of FIG. 3 is a system, configured by an imaging unit 11, a movement detection unit 12, an image acquiring unit 13, an obstacle detection unit 14, and a detection result output unit 15, for detecting an obstacle moving closer to the own vehicle (vehicle equipped with the obstacle detection system 1).

The imaging unit 11 is configured by a camera (imaging device), for example, and images a predetermined range according to a control from the image acquiring unit 13, and provides the obtained image to the image acquiring unit 13. In other words, the imaging unit 11 performs imaging by an imaging command from the image acquiring unit 13, and provides the obtained image to the image acquiring unit 13.

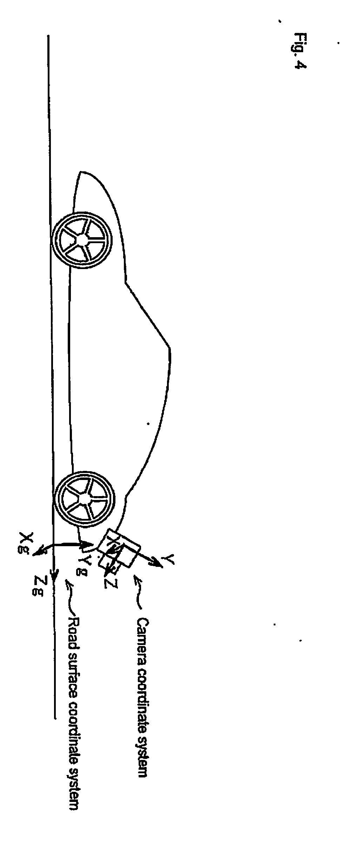

As shown in FIG. 4, in the embodiment described in the present specification, a camera is assumed to be installed at a rear side of the own vehicle, and attached so that an optical axis of the camera becomes parallel (substantially parallel) to a direction of a translation movement of the own vehicle.

A coordinate system (camera coordinate system) having the camera as a reference defines a horizontal direction of the image obtained by imaging as X axis, a vertical direction as Y axis, and a direction perpendicular to the plane of image as Z axis. A coordinate system (road surface coordinate system) having the road surface as a reference defines a direction of the translation movement of the own vehicle as Zg axis, a direction perpendicular to the Zg axis and perpendicular to the road surface as Yg axis, and a direction perpendicular to the Zg axis and the Yg axis as Xg axis.

The movement detection unit 12, the image acquiring unit 13, and the obstacle detection unit 14 are configured by an image processing device equipped with a CPU (Central Processing Unit), a RAM (Random Access Memory), and the like.

The movement detection unit 12 detects whether or not the own vehicle has moved a constant amount based on a vehicle speed pulse signal sent from a drive unit (not shown) of a vehicle when the own vehicle is moved. The movement detection unit 12 provides a detection signal to the image acquiring unit 13 when detecting that the own vehicle has moved a constant amount.

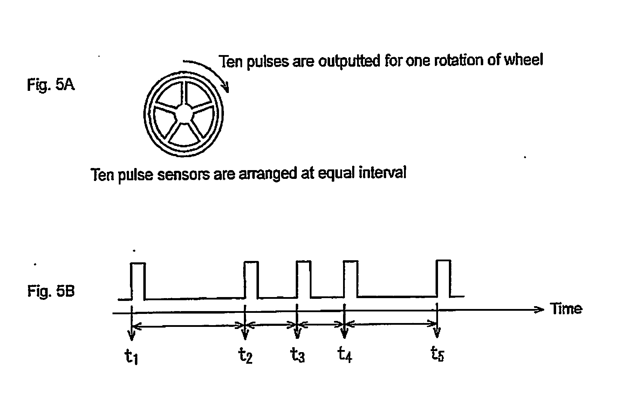

FIG. 5 shows a view explaining the process of the movement detection unit 12.

As shown in FIG. 5A, a wheel is arranged with ten pulse sensors at equal interval so that ten pulses are outputted for one rotation of the wheel. The number of pulse sensors arranged on the wheel is not limited to ten, and may be in other numbers. The movement detection unit 12 provides the detection signal to the image acquiring unit 13 every time a pulse (vehicle speed pulse signal of High level) is provided from the pulse sensor. In an example of the pulse shown in FIG. 5B, the detection signal is provided from the movement detection unit 12 to the image acquiring unit 13 at each time $t_1$, $t_2$, $t_3$, $t_4$, and $t_5$.

The pulse is outputted depending on the movement amount, and thus the time intervals between the detection signals, that is, the time interval from time $t_1$ to time $t_2$, the time interval from time $t_2$ to time $t_3$, the time interval from time $t_3$ to time $t_4$, and the time interval from time $t_4$ to time $t_5$ are different from each other (may not be the same).

However, the movement amount the own vehicle has moved is the same in all of time from time $t_1$ to time $t_2$, time from time $t_2$ to time $t_3$, time from time $t_3$ to time $t_4$, and time from time $t_4$ to time $t_5$.

Returning to FIG. 3, the image acquiring unit 3 acquires the image obtained by imaging with the imaging unit 11 every time the own vehicle moves a constant amount. That is, the image acquiring unit 13 provides the imaging command to the imaging unit 11 when the detection signal is provided from the movement detection unit 12. The image acquiring unit 13 acquires the image imaged with the imaging unit 11 in response to the imaging command. The image acquiring unit 13 repeats the above-described process every time the detection signal is provided from the movement detection unit 12 to thereby sequentially provide to the obstacle detection unit 14 a first image imaged at a first timing, and a second image imaged at a second timing, which is a timing a predefined amount (constant amount) of movement is performed from the position of the own vehicle when the first image is imaged. The second image is held for a predetermined time in the image acquiring unit 13, and becomes the first image when providing to the obstacle detection unit 14 the next time.

The obstacle detection unit 14 detects a predetermined object in the image through the movement stereo method using the first and second images sequentially provided from the image acquiring unit 13. The obstacle detection unit 14 determines whether or not the detected object is an obstacle, and provides information on the obstacle to the detection result output unit 15 when determining the detected object as an obstacle.

The detection result output unit 15 is configured by a display device such as a monitor, and outputs the information on the obstacle provided from the obstacle detection unit 14. For instance, the detection result output unit 15 displays a distance to the obstacle on the display device, or displays an image in which a position of the obstacle specified based on the information on the obstacle provided from the obstacle detection unit 14 is marked in the image imaged by the imaging unit 11.

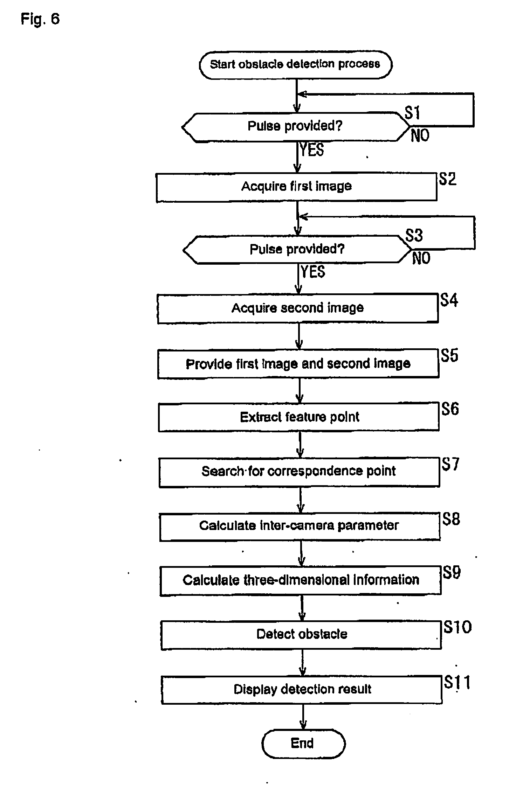

An obstacle detection process executed by the obstacle detection system 1 of FIG. 3 will be described below with reference to a flowchart of FIG. 6. This process starts when an engine of the own vehicle is started.

First, in step S1, the movement detection unit 12 determines whether or not a pulse (vehicle speed pulse signal of High level) is provided from the drive unit of the own vehicle, and waits until determined that the pulse is provided.

If determined that the pulse is provided in step S1, the movement detection unit 12 provides the detection signal to the image acquiring unit 13, and the image acquiring unit 13 provides the imaging command to the imaging unit 11 in step S2. Furthermore, the image acquiring unit 13 acquires the image imaged according to the imaging command from the imaging unit 11. The image acquired here is the first image of the two images compared by the movement stereo method. That is, the image acquiring unit 13 acquires the first image imaged in correspondence to the detection signal.

The movement detection unit 12 determines whether the pulse is provided from the drive unit of the own vehicle, and waits until determined that the pulse is provided in step S3.

If determined that the pulse is provided in step S3, the movement detection unit 12 provides the detection signal to the image acquiring unit 13, and the image acquiring unit 13 provides the imaging command to the imaging unit 11 in step S4. Furthermore, the image acquiring unit 13 acquires the image imaged according to the imaging command from the imaging unit 11. The image acquired here is the second image of the two images compared by the movement stereo method. That is, the image acquiring unit 13 acquires the second image imaged in correspondence to the detection signal.

In step S5, the image acquiring unit 13 provides the acquired first image and the second image to the obstacle detection unit 14.

In step S6, the obstacle detection unit 14 extracts feature points of the object from the provided first image. For instance, the obstacle detection unit 14 extracts points (locations) such as edge and corner of the object as feature points. The method of extracting the feature point is not particularly limited, and an arbitrary extracting method may be used.

In step S7, the obstacle detection unit 14 searches for a correspondence point, which is a point corresponding to the feature point extracted in the first image, with respect to the provided second image. The method of searching for the correspondence point is not particularly limited, and an arbitrary method such as pattern matching may be used.

In step S8, the obstacle detection unit 14 calculates an inter-camera parameter using a movement vector of the object obtained from the feature point of the object and the correspondence point thereof extracted in steps S6 and S7.

The inter-camera parameter represents a rotation angle (pitch angle) $\theta$ about the x axis in the camera coordinate system of the camera installed in the own vehicle, a rotation angle (yaw angle) $\varphi$ about the y axis, and a rotation angle (roll angle) $\phi$ about the z axis, where the inter-camera parameter may be obtained in the following manner.

The movement vector of the object detected from the image, and the inter-camera parameter can be defined as a relationship of the following equation.

$$f \times Xp \times \theta + f \times Yp \times \varphi - (Xp^2 + Yp^2) \times \phi - v_x \times Xp + v_y \times Yp = 0$$

(2)

In equation (2), f is the focal length of the camera and is substantially a constant as it is a value unique to the camera. Furthermore, $v_x$ is a component in an x axis direction in the image coordinate system of the movement vector of the detected object, $v_y$ is a component in a y axis direction in the image coordinate system of the movement vector, Xp is a coordinate in the x axis direction in the image coordinate system of the feature point corresponding to the movement vector, and Yp is a coordinate in the y axis direction in the image coordinate system of the feature point corresponding to the movement vector.

Equation (2) is a primary linear form in which the variables are the pitch angle $\theta$, the yaw angle $\varphi$, and the roll angle $\phi$ when the focal length f, a component $v_x$ in the x axis direction and a component $v_y$ in the y axis direction of the movement vector, as well as the coordinate Xp in the x axis direction and the coordinate Yp in the y axis direction of the feature point are known. Therefore, the pitch angle $\theta$, the yaw angle $\varphi$, and the roll angle $\phi$ are obtained by solving equation (2) as a linear optimization problem.

After calculating the inter-camera parameter, the obstacle detection unit 14 calculates three-dimensional information of the detected object.

For instance, if the detected object is a stationary object, the movement vector of the stationary object (optical flow) can be expressed as equation (3).

$$v = \frac{dXp}{dt} = \begin{pmatrix} v_x \\ v_y \end{pmatrix} = \begin{pmatrix} -f\psi + Yp\phi - \dfrac{t_x}{Z}f - \dfrac{Xp^2}{f}\psi + \dfrac{XpYp}{f}\theta + \dfrac{Xpt_z}{Z} \\[3mm] -Xp\phi + f\theta - \dfrac{t_y}{Z}f - \dfrac{XpYp}{f}\psi + \dfrac{Yp^2}{f}\theta + \dfrac{Ypt_z}{Z} \end{pmatrix}$$

$$\cdots (3)$$

In equation (3), $t_x$, $t_y$, and $t_z$ represent translation in the x axis, the y axis, and z axis directions of the camera, and X, Y, and Z are an X coordinate value, a Y coordinate value, and a Z coordinate value of the object in the camera coordinate system.

Transforming equation (3) such that X, Y, Z are on the left side respectively, equations (4) to (6) are obtained.

$$X = \frac{Xp}{f}Z \qquad \cdots (4)$$

$$Y = \frac{Yp}{f}Z \qquad \cdots (5)$$

$$Z = \frac{Ypt_z}{v_y + Xp\phi - f\theta + \dfrac{t_y}{Z}f + \dfrac{XpYp}{f}\psi - \dfrac{Yp^2}{f}\theta} \qquad \cdots (6)$$

The position (X, Y, Z) of the camera coordinate system of the object can be converted to a position (Xg, Yg, Zg) of the road surface coordinate system) by equation (7).

$$\begin{pmatrix} X_g \\ Y_g \\ Z_g \end{pmatrix} =$$

$$\begin{pmatrix} 1 & 0 & 0 \\ 0 & \cos\gamma & \sin\gamma \\ 0 & -\sin\gamma & \cos\gamma \end{pmatrix} \begin{pmatrix} \cos\beta & 0 & -\sin\beta \\ 0 & 1 & 0 \\ \sin\beta & 0 & \cos\beta \end{pmatrix} \begin{pmatrix} \cos\alpha & \sin\alpha & 0 \\ -\sin\alpha & \cos\alpha & 0 \\ 0 & 0 & 1 \end{pmatrix} \begin{pmatrix} X \\ Y \\ Z \end{pmatrix} + \begin{pmatrix} 0 \\ H \\ 0 \end{pmatrix}$$

$$\cdots (7)$$

In equation (7), $\alpha$, $\beta$, and $\gamma$ are installed roll angle, installed pitch angle, and installed yaw angle of the camera, and H is the height of the camera from the road surface.

The three-dimensional information of the detected stationary object, that is, the position (Xg, Yg, Zg) of the road surface coordinate system can be calculated in the above manner, and the position (Xg, Yg, Zg) of the road surface coordinate system of the object can be calculated even if the detected object is moving. Therefore, the obstacle detection unit 14 obtains the three-dimensional information for all objects detected from the image in step S9.

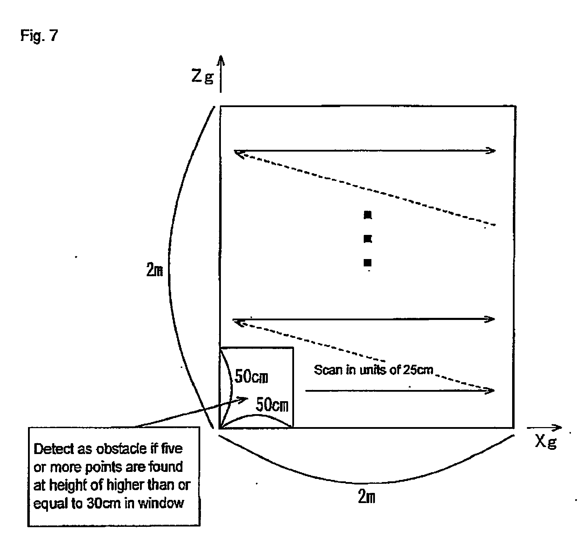

In step S10, the obstacle detection unit 14 detects an obstacle from the detected objects. For instance, as shown in FIG. 7, the obstacle detection unit 14 sets a 2m x 2m (Xg direction x Zg direction) detecting range in the road surface coordinate system, and scans the detecting range while moving a window of 50cm x 50cm by every 25cm. The obstacle detection unit 14 detects the object as an obstacle when five or more points are found at higher than or equal to the height of 30cm in the window. The information on the object detected as the obstacle is provided to the detection result output unit 15.

In step S11, the detection result output unit 15 displays the detection result, and terminates the process. For instance, the detection result output unit 15 acquires the image imaged by the imaging unit 11, displays the image marked with the position of the obstacle specified based on the information on the obstacle provided from the obstacle detection unit 14, and terminates the process.

In FIG. 6, the process of only one set of image (first image and second image), which is a requisite minimum in the measurement of the distance by the movement stereo method, has been described for the sake of simplifying the explanation, but actually, the images are sequentially generated in the imaging unit 11 with the provision of the pulses, and thus the processes of steps S1 to S11 are repeatedly executed with one part executed in parallel.

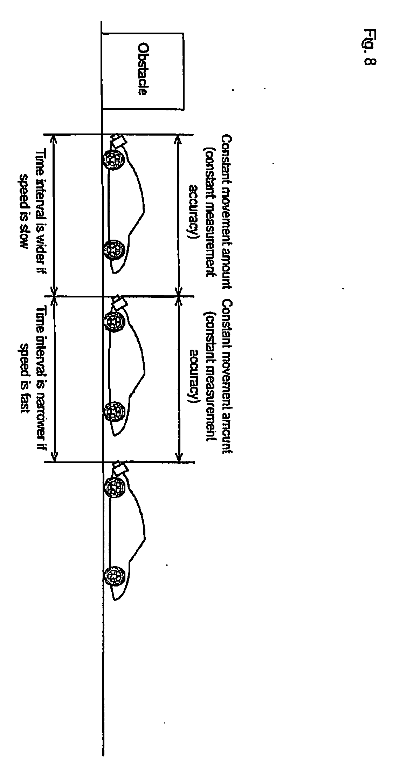

According to the obstacle detection process of FIG. 6, the first image and the second image sequentially processed in the obstacle detection unit 14 have a relationship of being imaged such that a distance between the positions the images are imaged is always a distance of a constant amount, as shown in FIG. 8. Therefore, a base length B in equation (1) does not change, and a distance error $\Delta Z$ (measurement error in distance to the object) is constant. That is, constant measurement accuracy is always obtained without being subjected to the influence of speed change.

Therefore, even if the user drives while dropping the speed of the vehicle as the vehicle comes closer to the stop target position in the situation of moving the vehicle backward and stopping in the front of the obstacle, as described with reference to FIG. 2, the measurement accuracy in measuring the obstacle can be set constant, and the obstacle can be detected while maintaining the measurement accuracy set in design.

Other embodiments of the obstacle detection system in which a distance between the first and second images is always set constant using signals other than the vehicle speed pulse signal will be described below.

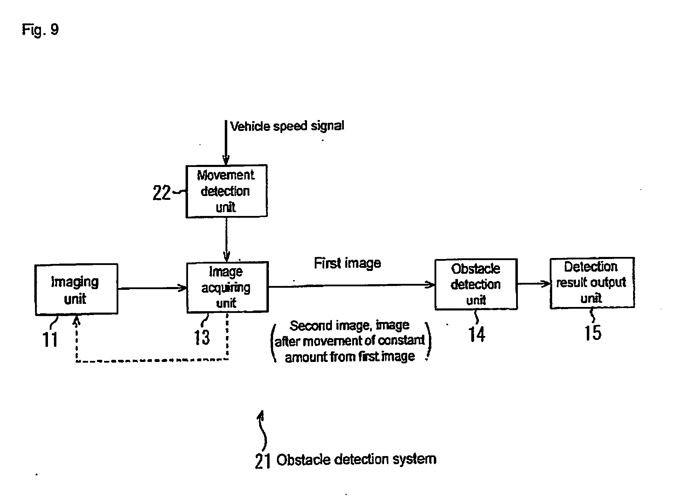

FIG. 9 shows a block diagram showing a configuration example of an obstacle detection system according to a second embodiment of the present invention.

In FIG. 9 and subsequent figures, same reference numerals are denoted for portions corresponding to the obstacle detection system 1 of FIG. 3, and the description thereof will be appropriately omitted.

An obstacle detection system 21 of FIG. 9 is configured similar to the obstacle detection system 1 other than that a movement detection unit 22 is arranged in place of the movement detection unit 12.

The movement detection unit 22 is provided with a vehicle speed signal, which is a signal representing the current vehicle speed of the own vehicle. The movement detection unit 22 is embedded with a timer for timing, and multiplies the time to the vehicle speed of the own vehicle (vehicle speed x time) to provide the detection signal to the image acquiring unit 13 when a timing the movement of a constant amount is made from a position of a predetermined time is reached. The movement detection unit 22 repeats the provision of the detection signal at the timing the movement of a constant amount is made with the position where the detection signal is provided before (immediately before) as a reference.

Therefore, in the obstacle detection system 21, the measurement accuracy of the obstacle measurement is made constant without being influenced by change in speed, and the obstacle can be detected while maintaining the measurement accuracy set in design. Furthermore, in the obstacle detection system 21, the vehicle speed pulse signal is not required, and thus obstacle can be detected at constant measurement accuracy even if the vehicle speed pulse cannot be acquired.

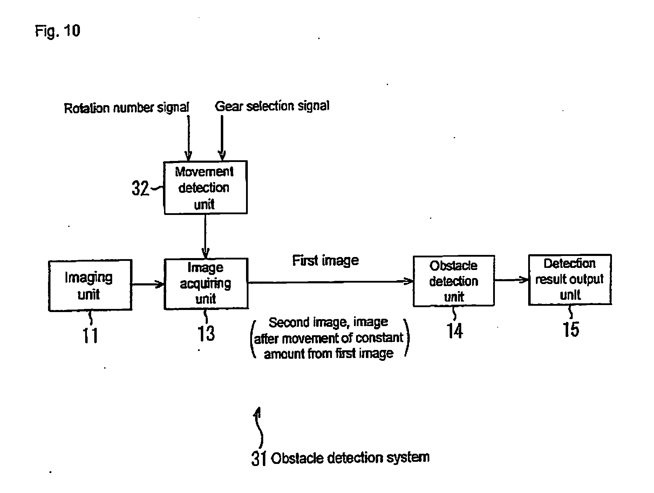

FIG. 10 shows a block diagram showing a configuration example of an obstacle detection system according to a third embodiment of the present invention.

An obstacle detection system 31 of FIG. 10 is configured similar to the obstacle detection system 1 other than that a movement detection unit 32 is arranged in place of the movement detection unit 12.

The movement detection unit 32 is provided with a rotation number signal, which is a signal representing the rotation number of the engine of the vehicle, and a gear selection signal, which is a signal representing the gear currently being selected. The movement detection unit 32 stores the gear ratio of a plurality of gears that can be selected and an outer diameter of the wheel (tire) in an internal memory, and multiplies the gear ratio of the gear currently being selected to the current engine rotation number (engine rotation number x gear ratio) to provide the detection signal to the image acquiring unit 13 when a timing the movement of a constant amount is made from a position of a predetermined time is reached. The movement detection unit 32 repeats the provision of the detection signal at the timing the movement of a constant amount is made with the position where the detection signal is provided before (immediately before) as a reference.

Therefore, in the obstacle detection system 31 as well, the measurement accuracy of the obstacle measurement is made constant without being influenced by change in speed, and the obstacle can be detected while maintaining the measurement accuracy set in design. Furthermore, in the obstacle detection system 31, the vehicle speed pulse signal is not required, and thus obstacle can be detected at constant measurement accuracy even if the vehicle speed pulse cannot be acquired.

In the embodiments described above, the imaging command is provided to the imaging unit 11 to carry out imaging when the detection signal is provided from the movement detection unit 12 (22 or 32), but the imaging unit 11 may perform imaging on a steady basis at a predetermined frame rate, and only the image corresponding to the timing the detection signal is provided of the images obtained as a result may be used.

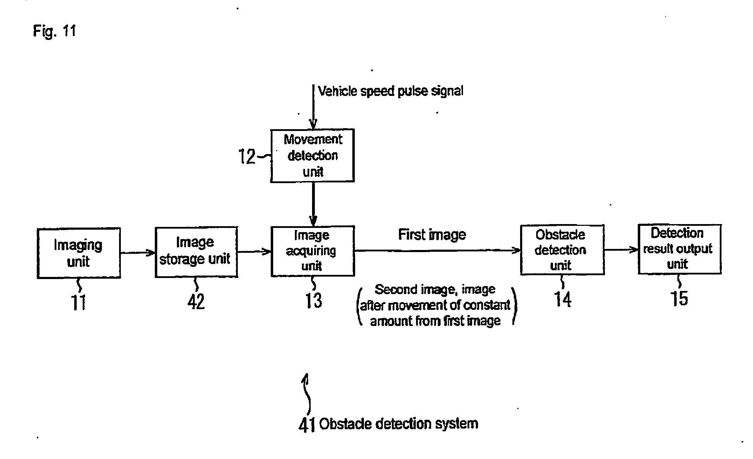

FIG. 11 shows an obstacle detection system according to a fourth embodiment of the present invention, and shows a configuration example of an obstacle detection system in a case where the imaging unit 11 performs imaging on a steady basis at a predetermined frame rate.

An obstacle detection system 41 of FIG. 11 is configured similar to the obstacle detection system 1 other than that an image storage unit 42 is newly arranged between the imaging unit 11 and the image acquiring unit 13.

The imaging unit 11 performs imaging on a steady basis at a predetermined frame rate, and provides the images obtained as a result to the image storage unit 42. The image storage unit 42 stores the provided images for a predetermined time.

The image acquiring unit 13 acquires the image imaged at a timing the detection signal is provided from the movement detection unit 12, that is, the image imaged when the movement detection unit 12 detects that the vehicle has moved a constant amount as a second image. The image acquiring unit 13 provides the second image to the obstacle detection unit 14 along with the first image acquired from the image storage unit 42 in correspondence to the detection signal immediately before.

Depending on the frame rate at which the imaging unit 11 is performing the imaging, the imaging may not be performed in concurrence with the timing the detection signal is provided, and the image when the movement of a constant amount is made may not be acquired, in which case, the image acquiring unit 13 may acquire the most recent image of the images stored in the image storage unit 42 as a second image at a timing the detection signal is provided. The image acquiring unit 13 may acquire the image imaged by the imaging unit 11 immediately after the timing the detection signal is provided as the second image. Alternatively, the most recent image of the images stored in the image storage unit 42 at the timing the detection signal is provided and an image imaged at a time closer to the timing (detection time) the detection signal is provided of the images imaged by the imaging unit 11 immediately after the timing the detection signal is provided may be acquired as the second image.

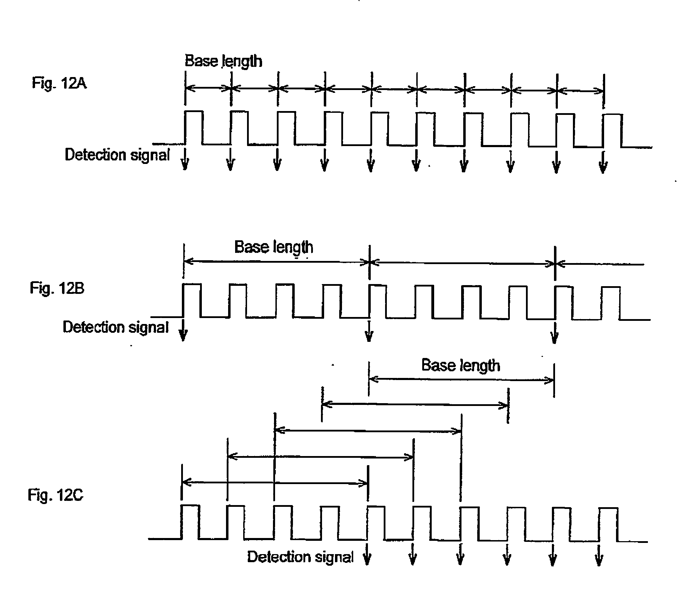

In the above-described embodiments, the detection signal is outputted for every one pulse, as shown in FIG. 12A, for the sake of simplifying the explanation, but since the distance error $\Delta Z$ becomes smaller the larger the base length B, as apparent from equation (1), the base length B is preferably set large.

However, as shown in FIG. 12B, although the base length B becomes large by acquiring the image for every predetermined number of pulse, the frequency (detection resolution) the detection signal is outputted becomes rough.

Thus, in the obstacle detection system 41 in which the image imaged at a predetermined frame rate is stored in the image storage unit 42 for a predetermined time, the second image acquired most recently and the first image acquired previously spaced apart by a sufficiently large base length B therefrom are combined, and the image imaged at the predetermined frame rate is acquired from the image storage unit 42 by shifting in synchronization with the provision of the pulse while maintaining the image interval (base length B) of the first image and the second image, so that measurement (detection) of the obstacle in which the detection resolution is fine and the measurement error is reduced can be carried out, as shown in FIG. 12C.

In some cases, the movement amount is small, and a sufficiently large base length B as shown in FIG. 12C cannot be ensured, and thus the manner of taking the base length shown in FIGS. 12A to 12C is appropriately combined (switched) for use.

An example of detecting that the movement of a constant amount is made based on the vehicle speed pulse signal has been described for the obstacle detection system 41, but the detection that the movement of a constant amount is made can be detected based on the vehicle speed signal, or the rotation number signal and the gear selection signal used in the second and the third embodiments in place of the vehicle speed pulse signal.

Other further embodiments of the obstacle detection system according to one or more embodiments of the present invention will be described below.

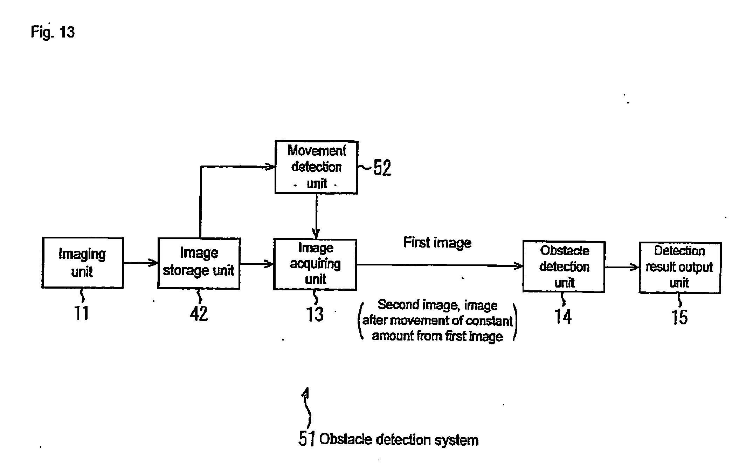

FIG. 13 shows a block diagram showing a configuration example of an obstacle detection system according to a fifth embodiment of the present invention.

An obstacle detection system 51 is arranged with a movement detection unit 52 in place of the movement detection unit 12 compared to the configuration of the obstacle detection system 41 of FIG. 11, where the movement detection unit 52 is provided with images from the image storage unit 42 instead of the vehicle speed pulse signal. Other configurations of the obstacle detection system 51 are similar to the obstacle detection system 41 of FIG. 11.

In the first to the fourth embodiments of the obstacle detection system described above, the movement of a constant amount of the own vehicle is detected based on the signal from the sensor attached to the vehicle such as the vehicle speed pulse signal and the vehicle speed signal, but in the obstacle detection system 51, the movement of a constant amount of the own vehicle is detected from information obtained inside the obstacle detection system, more specifically, from the image stored in the image storage unit 42. Therefore, the obstacle detection system 51 has an advantage in that the movement of a constant amount can be detected even if an external signal such as the vehicle speed pulse signal or the vehicle speed signal is not provided.

First, a manner of obtaining the movement amount from two images will be briefly described.

For example, if the detected object is a stationary object, the movement vector (optical flow) of the stationary object can be expressed as equation (3), and thus if three or more movement vectors are obtained from the stationary object (e.g., road surface etc.) in which three-dimensional information is known, the translation tx, ty, and tz in the x axis, the y axis, and the z axis directions of the camera can be obtained using the following equation (8).

$$X = (A^{\mathsf{T}}A)^{-1} A^{\mathsf{T}}B \qquad \cdots (8)$$

Here, A, X, and B are expressed as,

$$A = \begin{pmatrix} Yp_1 & -f-\dfrac{Xp_1{}^2}{f} & \dfrac{Xp_1Yp_1}{f} & -\dfrac{f}{Z_1} & 0 & \dfrac{Xp_1}{Z_1} \\[2ex] -Xp_1 & -\dfrac{Xp_1Yp_1}{f} & f+\dfrac{Yp_1{}^2}{f} & 0 & -\dfrac{f}{Z_1} & \dfrac{Yp_1}{Z_1} \\[2ex] \vdots & \vdots & \vdots & \vdots & \vdots & \vdots \\[2ex] Yp_n & -f-\dfrac{Xp_n{}^2}{f} & \dfrac{Xp_nYp_n}{f} & -\dfrac{f}{Z_n} & 0 & \dfrac{Xp_n}{Z_n} \\[2ex] -Xp_n & -\dfrac{Xp_nYp_n}{f} & f+\dfrac{Yp_n{}^2}{f} & 0 & -\dfrac{f}{Z_n} & \dfrac{Yp_n}{Z_n} \end{pmatrix},$$

$$X = (\phi \ \ \psi \ \ \theta \ \ t_x \ \ t_y \ \ t_z)^{\mathsf{T}}, B = \begin{pmatrix} v_{x1} \\ v_{y1} \\ \vdots \\ v_{xn} \\ v_{yn} \end{pmatrix}$$

Equation (8) is an equation when n movement vectors are obtained.

Using the translation tx, ty, and tz in the x axis, the y axis, and the z axis directions of the camera obtained by equation (8), the movement amount of the own vehicle can be obtained from equation (9).

$$= (\sin\alpha \cdot \sin\gamma + \cos\alpha \cdot \sin\beta \cdot \cos\gamma)\, t_x$$

$$+ (\sin\alpha \cdot \sin\beta \cdot \cos\gamma - \cos\alpha \cdot \sin\gamma)\, t_y + (\cos\beta \cdot \cos\gamma)\, t_z$$

$$\cdots (9)$$

The movement detection unit 52 processes two predetermined images stored in the image storage unit 42 to detect that the own vehicle has moved a predefined amount (constant amount).

For instance, the movement detection unit 52 processes the two images imaged at different times to calculate the movement amount the own vehicle has moved in a time interval the relevant two images are imaged. The movement detection unit 52 then calculates how many times the time interval similar to the interval s of the two images subjected to image processing needs to be repeated in order for the movement amount to reach the predefined amount from the calculated movement amount, and provides the detection signal to the image acquiring unit 13 at the time point the time interval of the calculated number of times has elapsed. Specifically, if the movement amount calculated from the two image interval is 5cm, and the predefined amount is 30cm, similar image interval is repeated six times (five more times) for the movement amount to become 30cm.

Instead of repeating similar image interval for a predetermined number of times, the image interval in which the time of acquiring the image the next time becomes the timing the movement of a constant amount defined in advance is made may be calculated. In this case, the image interval of the next time is obtained by dividing the predefined movement amount by the quotient of dividing the movement amount for this time with the image interval for this time (image acquiring interval of next time = predefined movement amount = predefined movement amount ÷ (movement amount for this time ÷ image interval for this time).

Thus, the movement detection unit 52 can detect that the movement of a constant amount is made based on the relationship between the image interval of the image previously obtained and the movement amount.

The movement of a constant amount may be detected by integrating the movement amount sequentially calculated from the imaged image. That is, the movement detection unit 52 processes the two images imaged at different times to calculate the movement amount the own vehicle has moved in the time interval the two images are imaged. The movement detection unit 52 may integrate the movement amount sequentially calculated from the position of reference (position corresponding to first image), and provide the detection signal to the image acquiring unit 13 when the movement amount has reached the predefined amount. Specifically, if the predefined amount is 30 cm, and the movement amount calculated from the two image intervals is 7cm, 5cm, 5cm, 4cm, ... in time series, the movement amount from the position of reference is calculated as 7cm, 12cm, 17cm, 21 cm, ..., and thus similar process is repeated until the movement amount is calculated as 30cm. The two image interval for calculating the movement amount may be constant, or may be changed, for example, the image interval may be reduced the closer to the target movement amount.

Therefore, in the obstacle detection system 51, the measurement accuracy of the obstacle measurement can be made constant without being influenced by change in speed by processing the images imaged by the imaging unit 11, and the obstacle can be detected while maintaining the measurement accuracy set in design.

The processes performed by the movement detection unit 52 (12, 22, 32), the image acquiring unit 13, the obstacle detection unit 14, and the image storage unit 42 corresponding to the image processing device may be executed by hardware or may be executed by software. When executing the processes by software, the program configuring such software is installed from a program recording medium to a computer incorporated in a dedicated hardware, or a general personal computer capable of executing various functions by installing various programs.

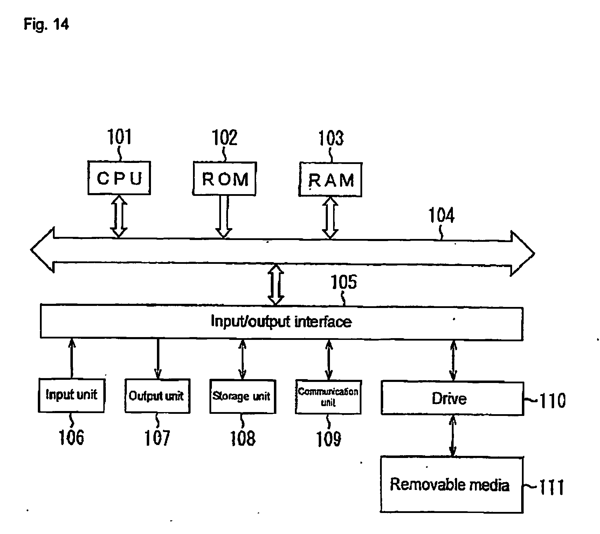

FIG. 14 shows a block diagram showing a configuration example of a hardware of a computer for causing program to perform the processes by the movement detection unit 52 (12, 22, 32), the image acquiring unit 13, the obstacle detection unit 14, and the image storage unit 42 serving as the image processing device.

In the computer, a CPU (Central Processing Unit) 101, a ROM (Read Only Memory) 102, and a RAM (Random Access Memory) 103 are connected to each other by a bus 104.

The bus 104 is also connected with an input/output interface 105. The input/output interface 105 is connected with an input unit 106 including keyboard, mouse, and microphone; an output unit 107 including display and speaker; a storage unit 108 including hard disc and non-volatile memory; a communication unit 109 including network interface; and a drive 110 for driving a removable media 111 such as magnetic disc, optical disc, magnetic optical disc, or semiconductor memory.

In the computer configured as above, the CPU 101 loads the program stored in the storage unit 108 to the RAM 103 through the input/output interface 105 and the bus 104 and executes the program to perform the series of processes described above.

The program to be executed by the computer (CPU 101) is recorded on the removable media 111 that is a package media such as magnetic disc (include flexible disc), optical disc (CD-ROM (Compact Disc-Read Only Memory), DVD (Digital Versatile Disc) etc.), magnetic optical disc, or semiconductor memory, or provided through a wired or wireless transmission medium such as local area network, Internet, or digital satellite broadcast.

The program can be installed in the storage unit 108 through the input/output interface 105 by loading the removable media 111 in the drive 110. The program can also be installed in the storage unit 108 by receiving at the communication unit 109 through the wired or wireless transmission medium. In addition, the program can be installed in advance in the ROM 102 or the storage unit 108.

The program to be executed by the computer may be a program in which the processes are performed in times series in the order described in the present specification, or may be a program in which the processes are performed in parallel or at the necessary timing such as when call-out is made.

In the present specification, the steps described in the flowchart obviously include processes performed in times series in the described order, but also include processes executed in parallel or individually and not necessarily processed in time series.

In the example described above, an example of detecting the obstacle behind the own vehicle has been described, but it should be recognized that the obstacle detection process described above can be similarly carried out even when detecting an obstacle in front of the own vehicle or around the own vehicle.

In the present specification, the system represents the entire device configured by a plurality of devices.

The embodiment of the present invention is not limited to the embodiments described above, and various modifications may be made within a scope not deviating from the concept of the present invention.

**Claims**

1. An image processing device for performing a process of measuring a distance to a predetermined object using an image imaged by an imaging device (11) attached to a vehicle which moves; the image processing device comprising:

   a movement detection unit (12, 22, 32, 52) for detecting that the vehicle moved a constant amount from a position where the imaging device (11) imaged a first image;
   an image acquiring unit (13) for acquiring the first image and a second image serving as an image at the time when the movement detection unit (12, 22, 32, 52) detects that the vehicle moved a constant amount; and
   a measurement unit (14) for measuring the distance to the object by a movement stereo method using the first image and the second image acquired by the image acquiring unit (13).

2. The image processing device according to claim 1, wherein the movement detection unit (12) detects that the vehicle moved a constant amount based on a signal from a sensor attached to the vehicle.

3. The image processing device according to claim 2, wherein the signal from the sensor attached to the vehicle is a signal of a vehicle speed pulse.

4. The image processing device according to claim 2, wherein the signal from the sensor attached to the vehicle is a signal representing vehicle speed.

5. The image processing device according to claim 2, wherein the signal from the sensor attached to the vehicle is a signal representing an engine rotation number of the vehicle and a gear selection signal representing a selected gear.

6. The image processing device according to claim 1, wherein the movement detection unit (52) detects that the vehicle moved a constant amount by processing an image imaged by the imaging device (11).

7. The image processing device according to claim 6, wherein the movement detection unit (52) detects that the vehicle moved a constant amount based on a relationship between an image interval of the image imaged previously and a movement amount.

8. The image processing device according to claim 6, wherein the movement detection unit (52) detects that the vehicle moved a constant amount by integrating a movement amount sequentially calculated from the imaged image.

9. The image processing device according to claim 1, wherein the image acquiring unit (13) acquires the second image imaged when the movement detection unit (12, 22, 32, 52) detects that the vehicle moved a constant amount from the position where the first image is imaged.

10. The image processing device according to claim 1, further comprising:

    an image storage unit (42) for storing images imaged by the imaging device (11); wherein
    the image acquiring unit (13) acquires, as the second image, a most recent image of the images stored in the image storage unit (42) when the movement detection unit (12) detects that the vehicle moved a constant amount from the position where the first image is imaged.

11. The image processing device according to claim 1, wherein the image acquiring unit (13) acquires, as the second image, an image imaged immediately after the movement detection unit (12) detects that the vehicle moved a constant amount from the position where the first image is imaged.

12. The image processing device according to claim 1, further comprising:

    an image storage unit (42) for storing images imaged by the imaging device (11); wherein
    the image acquiring unit (13) acquires, as the second image, a most recent image of the images stored in the image storage unit (42) at a time when the movement detection unit (12) detects that the vehicle moved a constant amount from the position where the first image is imaged, or an image imaged at a time close to the detection time of the images imaged immediately after the detection time.

13. An image processing method for performing a process of measuring a distance to a predetermined object using an image imaged by an imaging device (11) attached to a vehicle which moves; the image processing method comprising the steps of:

detecting that the vehicle moved a constant amount from a position where the imaging device (11) imaged a first image;

acquiring the first image and a second image serving as an image at the time when it is detected that the vehicle moved a constant amount; and

measuring the distance to the object by a movement stereo method using the acquired first image and second image.

14. A computer readable medium storing a program comprising functionality for causing a computer to perform a process of measuring a distance to a predetermined object using an image imaged by an imaging device (11) attached to a vehicle which moves, wherein the process comprises:

detecting that the vehicle moved a constant amount from a position where the imaging device (11) imaged a first image;

acquiring the first image and a second image serving as an image at the time when it is detected that the vehicle moved a constant amount; and

measuring the distance to the object by a movement stereo method using the acquired first image and second image.

Fig. 1

Image Pt + Δt of time t + Δt

Q (X, Y, Z)

$(x_u, y_u)$

optical center

Camera moves

$(x_l, y_l)$

Image Pt of time t

optical center

B

f

EP 2 085 791 A1

Fig. 2

Obstacle

Drop speed as distance to
obstacle becomes closer
(low measurement
accuracy)

B2

Δt

Same time interval

Δt

Fast speed when
distant to obstacle exists
(high measurement accuracy)

B1

Fig. 3

Vehicle speed pulse signal

12 — Movement detection unit

11 — Imaging unit

13 — Image acquiring unit

First image → Obstacle detection unit — 14

Detection result output unit — 15

( Second image, image after movement of constant amount from first image )

1 Obstacle detection system

Fig. 4

Fig. 5A

Ten pulses are outputted for one rotation of wheel

Ten pulse sensors are arranged at equal interval

Fig. 5B

Time

$t_1$  $t_2$  $t_3$  $t_4$  $t_5$

**Fig. 6**

Start obstacle detection process

S1 — Pulse provided? — NO / YES

S2 — Acquire first image

S3 — Pulse provided? — NO / YES

S4 — Acquire second image

S5 — Provide first image and second image

S6 — Extract feature point

S7 — Search for correspondence point

S8 — Calculate inter-camera parameter

S9 — Calculate three-dimensional information

S10 — Detect obstacle

S11 — Display detection result

End

Fig. 7

Detect as obstacle if five or more points are found at height of higher than or equal to 30cm in window

2m

$Z_g$

50cm

50cm

Scan in units of 25cm

■ ■ ■

2m

$X_g$

Fig. 8

Obstacle

Constant movement amount
(constant measurement
accuracy)

Constant movement amount
(constant measurement
accuracy)

Time interval is wider if
speed is slow

Time interval is narrower if
speed is fast

Fig. 9

Vehicle speed signal

22 — Movement
detection
unit

Imaging
unit

Image
acquiring
unit

First image

Obstacle
detection
unit

Detection
result output
unit

11

13

Second image, image
(after movement of constant)
amount from first image

14

15

21 Obstacle detection system

Fig. 10

Rotation number signal      Gear selection signal

32 — Movement detection unit

Imaging unit          Image acquiring unit        First image        Obstacle detection unit        Detection result output unit

11          13          14          15

(Second image, image after movement of constant amount from first image)

31 Obstacle detection system

Fig. 11

Vehicle speed pulse signal

12 —⟨ Movement
detection
unit

First image

Imaging
unit

Image
storage unit

Image
acquiring
unit

Obstacle
detection
unit

Detection
result output
unit

11

42

13

Second image, image
(after movement of constant
amount from first image)

14

15

41 Obstacle detection system

Fig. 12A

Fig. 12B

Fig. 12C

Fig. 13

Imaging unit  11

Image storage unit  42

Movement detection unit  52

Image acquiring unit  13

First image

Second image, image
(after movement of constant
amount from first image)

Obstacle detection unit  14

Detection result output unit  15

51 Obstacle detection system

Fig. 14

Removable media ~111

Drive ~110

Communication unit 109

Storage unit 108

Output unit 107

Input unit 106

Input/output interface

105

104

RAM 103

ROM 102

CPU 101

**Europäisches Patentamt**
**European Patent Office**
**Office européen des brevets**

# EUROPEAN SEARCH REPORT

Application Number

EP 09 15 1485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | US 6 445 809 B1 (SASAKI KAZUYUKI [JP] ET AL) 3 September 2002 (2002-09-03) * the whole document * ----- | 1,13,14 | INV. G01S11/12 G06T7/00 G06T7/20 |
| A | US 6 172 601 B1 (WADA JYOJI [JP] ET AL) 9 January 2001 (2001-01-09) * column 4, line 62 - column 5, line 20; figures 1,5 * ----- | | |
| A | US 2007/236561 A1 (ANAI TETSUJI [JP] ET AL) 11 October 2007 (2007-10-11) * paragraphs [0051] - [0055]; figures 3,4,8 * ----- | | |

| | | | TECHNICAL FIELDS SEARCHED (IPC) |
|---|---|---|---|
| | | | G01S G06T |

The present search report has been drawn up for all claims

| Place of search | Date of completion of the search | Examiner |
|---|---|---|
| Munich | 11 May 2009 | Kern, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 1485

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2009

| Patent document cited in search report | | Publication date | Patent family member(s) | | Publication date |
|---|---|---|---|---|---|
| US 6445809 | B1 | 03-09-2002 | JP | 3463858 B2 | 05-11-2003 |
| | | | JP | 2000074645 A | 14-03-2000 |
| US 6172601 | B1 | 09-01-2001 | CN | 1255624 A | 07-06-2000 |
| | | | DE | 69932021 T2 | 12-07-2007 |
| | | | EP | 1005234 A2 | 31-05-2000 |
| | | | JP | 2000161915 A | 16-06-2000 |
| US 2007236561 | A1 | 11-10-2007 | EP | 1843292 A1 | 10-10-2007 |
| | | | JP | 2007278845 A | 25-10-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006053754 A
- JP 2000074645 A